# FASCICULE DE BREVET EUROPEEN

(11) **EP 3 201 496 B1**
(45) Date de publication et mention de la délivrance du brevet: **18.07.2018**
(21) Numéro de dépôt: 15771185.4
(22) Date de dépôt: 07.09.2015
(51) Int. Cl.: F16H 59/02

(54) **POMMEAU DE LEVIER DE CHANGEMENT DE RAPPORT DE VEHICULE AUTOMOBILE ET MECANISME DE COMMANDE DE CHANGEMENT DE RAPPORT COMPORTANT UN TEL POMMEAU**
KRAFTFAHRZEUGSCHALTHEBELKNOPF UND SCHALTHEBELBETÄTIGUNGSMECHANISMUS MIT SOLCH EINEM KNOPF
MOTOR VEHICLE GEARSHIFT LEVER KNOB AND GEARSHIFT OPERATING MECHANISM COMPRISING SUCH A KNOB

(30) Priorité: 29.09.2014 FR 1459184
(43) Date de publication de la demande: 09.08.2017
(73) Titulaire: Renault s.a.s., 92100 Boulogne-Billancourt (FR)
(72) Inventeur: ZHANG, Charles, F-78280 Guyancourt (FR); LAINE, Sébastien, F-78370 Plaisir (FR)
(86) Numéro de dépôt international: PCT/FR2015/052363
(87) Numéro de publication internationale: WO 2016/051034

(56) Documents cités:
- FR-A1- 2 823 870
- JP-A- 2002 161 941
- JP-A- 2004 142 651
- US-A- 4 896 556

## Description

### DOMAINE TECHNIQUE DE L'INVENTION

La présente invention se rapporte à un pommeau de levier de changement de rapport de boîte de vitesses de véhicule automobile.

### ETAT DE LA TECHNIQUE

L'invention concerne plus particulièrement un mécanisme de commande d'une boîte de vitesses comportant un levier de changement de rapport, aussi appelé levier de changement de vitesses.

Dans un tel mécanisme, lorsque l'on lâche ou relâche le levier après avoir procédé à un changement de rapport, le levier revient de lui-même vers une position stable, aussi appelée monostable, sous l'effet d'un effort de rappel élastique.

Selon différentes conceptions connues, cet effort de rappel élastique est en général appliqué, directement ou indirectement, à une extrémité inférieure du levier, tandis que son extrémité supérieure est équipée d'un pommeau de manipulation du levier.

Le retour du levier vers la position stable peut provoquer, en fin de course, des phénomènes de chocs, éventuellement avec des rebonds, dus notamment à des chocs avec une ou des butées dans le mécanisme de rappel élastique.

De tels chocs ou vibrations se propagent par l'intermédiaire du levier en direction du pommeau en affectant aussi éventuellement, au niveau d'un tronçon intermédiaire du levier, un rideau ou une coupelle traversé par le corps du levier qui a pour fonction d'obturer une ouverture pour le passage du levier qui est formée dans un équipement du véhicule tel qu'une console de l'habitacle.

Ainsi, le rideau ou coupelle et le pommeau, qui sont des composants creux de grande dimension, se comportent comme des amplificateurs des vibrations transmises par le levier et ensuite comme des émetteurs d'un bruit à haute fréquence, notamment supérieure à 700 Hz.

Ces bruits sont perçus par les occupants du véhicule de manière négative comme pouvant refléter des défauts de fonctionnement ou une qualité insuffisante du produit.

D'une manière générale, il a déjà été proposé différentes solutions pour absorber des vibrations d'un pommeau de levier de changement de vitesses visant notamment à en augmenter la masse totale de manière relativement importante et/ou à découpler mécaniquement le pommeau de la tige du levier de changement de vitesses par interposition de matériaux absorbant les vibrations. Une de ces solutions, comportant toutes les caractéristiques du préambule de la revendication 1, est connue de JP 2004 142651 A. Ces deux catégories de solutions ont pour inconvénient de nécessiter une nouvelle conception complète du pommeau et de sa liaison à la tige du levier et qui ont notamment pour conséquences d'en augmenter le poids de manière importante et le coût, et de ne pas pouvoir être adaptées simplement à des conceptions existantes d'un pommeau dont on souhaite réduire les phénomènes de vibrations évoquées ci-dessus.

La présente invention vise à proposer une nouvelle solution à ces problèmes.

### BREF RESUME DE L'INVENTION

Dans ce but, l'invention propose un pommeau de levier de changement de rapport de boîte de vitesses de véhicule automobile comportant un corps creux en matériau rigide comportant une partie supérieure formant tête de préhension et une partie inférieure, le corps étant délimité par une surface intérieure, le pommeau comportant des moyens internes d'amortissement des vibrations, caractérisé en ce qu'au moins une portion de la surface intérieure du corps est munie d'un morceau d'une feuille d'amortissement des vibrations constituée d'une couche de matériau adhésif viscoélastique qui est fixée par adhésion sur la surface intérieure du corps, et d'un film de métal solidaire de ladite couche.

Selon d'autres caractéristiques de l'invention :
- au moins une portion de la surface intérieure de la partie supérieure du corps est munie d'un morceau de la feuille d'amortissement des vibrations ;
- le pommeau est réalisé en deux pièces complémentaires dont chacune comporte au moins une portion de sa surface intérieure munie d'un morceau de la feuille d'amortissement des vibrations ;
- chacune des deux pièces complémentaires comporte une partie de la partie supérieure et une partie de la partie inférieure du corps ;
- le morceau de la feuille d'amortissement des vibrations est délimité pour constituer un morceau d'aire maximale apte à adhérer sur une portion de la surface intérieure du corps ;
- le film est un film d'aluminium ;
- la couche est réalisée en un polymère viscoélastique, naturel ou synthétique ;
- au moins 70% de l'aire totale de la surface intérieure du corps du pommeau est recouverte par des morceaux de la feuille d'amortissement des vibrations ;
- le corps est réalisé par moulage en matière plastique, notamment en acrylonitrile butadiène styrène, et/ou en polyamide 6-6 renforcé de fibres.

L'invention propose aussi un mécanisme de commande de changement de rapport de boîtes de vitesse de véhicule automobile, caractérisé en ce qu'il comporte un levier de changement de rapport, des moyens de rappel élastique de ce levier vers au moins une position stable, et un pommeau réalisé conformément aux enseignements de l'invention.

### BREVE DESCRIPTION DES FIGURES

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective d'un exemple d'un pommeau de changement de rapport de boîte de vitesses comportant un corps creux réalisé en deux pièces complémentaires ;
- la figure 2 est une vue analogue à celle de la figure 1 illustrant l'une des deux pièces constitutives du corps creux du pommeau de la figure 1 ;
- la figure 3 est une vue de dessous de la pièce illustrée à la figure 2 munie d'un premier morceau de feuille d'amortissement des vibrations selon l'invention ;
- la figure 4 est une vue latérale de gauche de la pièce de la figure 2 faisant apparaître un autre morceau de feuille d'amortissement des vibrations selon l'invention ;
- la figure 5 est une vue en perspective analogue à celle de la figure 1 illustrant l'autre pièce constitutive du corps creux ;
- la figure 6 est une vue en perspective de dessus de la pièce de figure 5 faisant apparaître un autre morceau de feuille d'amortissement des vibrations selon l'invention ;
- la figure 7 est une vue latérale de droite de la pièce de figure 5 faisant apparaître encore un autre morceau de feuille d'amortissement des vibrations selon l'invention ; et
- la figure 8 est une vue schématique en section illustrant un exemple de réalisation d'une feuille d'absorption des vibrations selon l'invention fixée par adhésion sur une portion de surface intérieure d'un élément constitutif du pommeau de la figure 1.

### DESCRIPTION DETAILLEE DES FIGURES

Dans la description qui va suivre, sans référence à la gravité terrestre, on utilisera les termes vertical, transversal, longitudinal en référence au trièdre V, T, L indiqué sur les figures.

Des composants ou parties identiques, analogues, ou similaires seront désignés par les mêmes références.

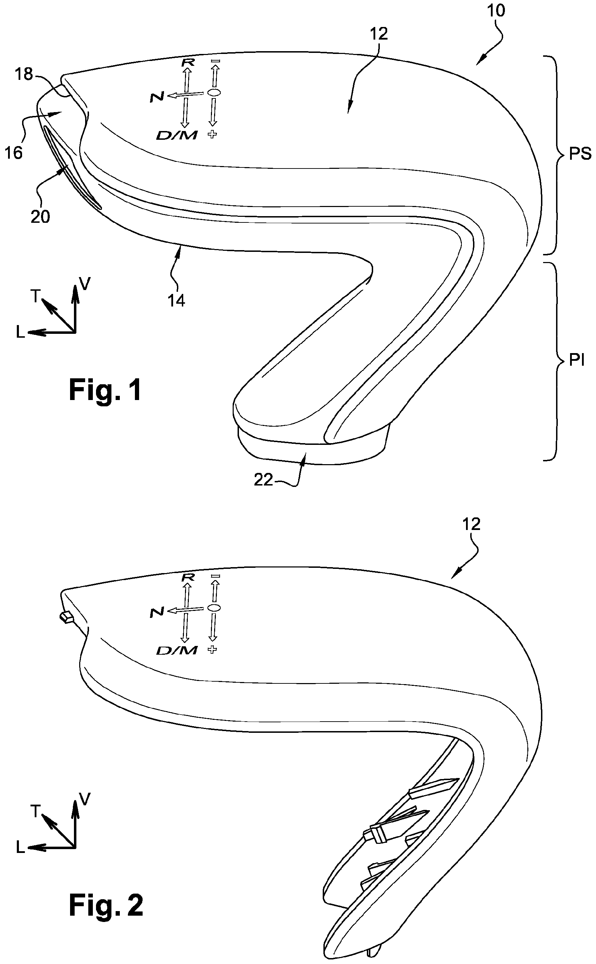

On a représenté à la figure 1, un pommeau creux de commande des changements de rapport d'une boîte de vitesses, qui, à titre d'exemple non limitatif, est ici un pommeau de commande associé à une boîte de vitesses dite "automatique".

Le pommeau 10 se présente sous la forme d'un corps creux qui est ici réalisé en deux pièces complémentaires 12 et 14 dont chacune est réalisée par moulage en matière plastique, par exemple en ABS (acrylonitrile butadiène styrène) pour la pièce 12, et en PA66 GF30 (polyamide 6-6 renforcé de fibres) pour la deuxième pièce 14.

Les deux pièces complémentaires 12 et 14 s'assemblent selon un plan de joint de forme complexe et sont fixées l'une à l'autre par des moyens d'emboîtement élastique et/ou par collage.

En position assemblée, comme on peut le voir notamment à la figure 1, les deux pièces complémentaires 12 et 14 délimitent une ouverture ou fenêtre avant 18 à travers laquelle fait saillie longitudinalement un bouton de commande 20 qui ne sera pas décrit plus en détails par la suite.

Le pommeau 10 se présente par ailleurs géométriquement comme comportant une partie supérieure PS d'orientation ici globalement horizontale qui constitue la partie de préhension proprement dite du pommeau, et une partie inférieure PI d'orientation globalement verticale qui est traversée par des organes mécaniques de raccordement du levier, tels que par exemple une tige de levier (non représentée) pour relier le pommeau à l'ensemble d'un mécanisme de commande de changement de rapport relié à la boîte de vitesse proprement dite.

Le tronçon d'extrémité inférieure 22 de la partie inférieure PI est conformé en une couronne apte à traverses une ouverture complémentaire formée dans un rideau ou une coupelle (non représentée).

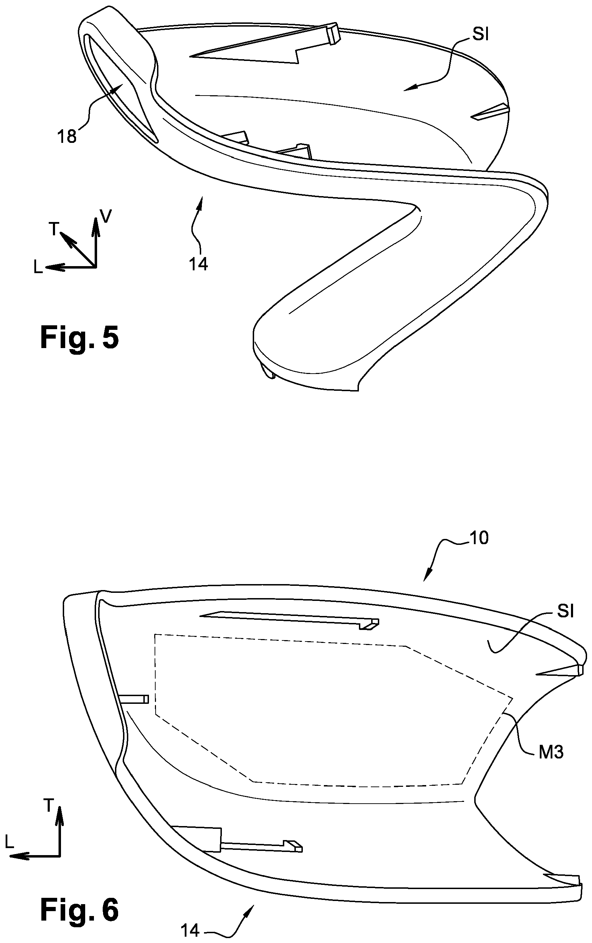

Comme on peut le voir aux figures 2 et 5, chacune des deux pièces 12 et 14 comporte une portion de la partie supérieure PS et une portion de la partie inférieure PI, tandis que l'ouverture 18 est ici formée seulement dans la pièce 14.

Chacune des deux pièces 12 et 14 est délimitée intérieurement par une surface intérieure SI qui, au regard de la mise en oeuvre de la présente invention, comporte de nombreuses portions "libres", c'est-à-dire des portions n'ayant pas de fonction particulière et présentant des aires disponibles, tant en partie supérieure PS qu'en partie inférieure PI.

Conformément à l'invention, le pommeau 10 est ici équipé de plusieurs morceaux Mi d'une feuille 30 d'amortissement des vibrations.

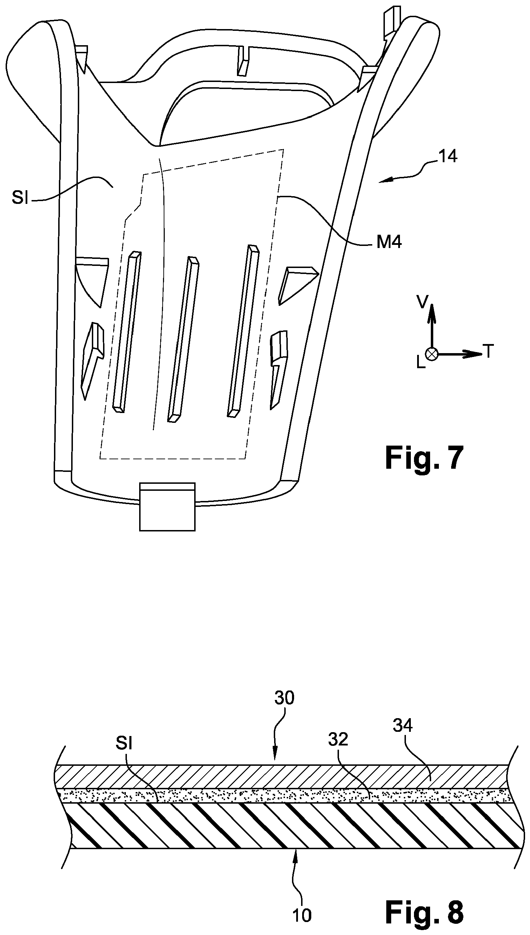

Comme on peut le voir à la figure 8, la feuille d'amortissement des vibrations 30 est constituée d'une couche 32 de matériau adhésif viscoélastique qui est fixée par adhésion sur une portion en vis-à-vis de la surface intérieure SI du corps creux, et d'un film de métal 34 qui est solidaire, par adhésion, de la couche viscoélastique 32.

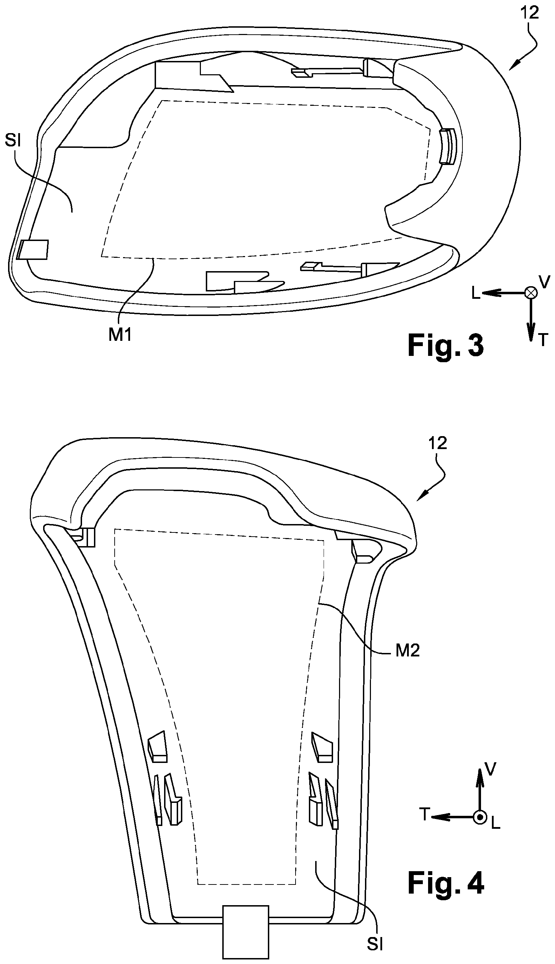

Sur les figures 3, 4, 6 et 7, on a illustré de manière schématique en pointillés, le contour de quatre morceaux Mi parmi les lesquels deux morceaux M1 et M2 sont fixés sur des portions associées de la surface intérieure SI de la première pièce 12, tandis que les deux morceaux M3 et M4 sont fixés sur des portions associées de la surface intérieure SI de la deuxième pièce 14.

Le contour de chaque morceau Mi dépend de la zone dans laquelle il est agencé et de la conformation de cette zone, en fonction de la conception du pommeau.

La découpe du contour de chaque morceau Mi vise à réaliser un morceau de la plus grande aire possible pouvant être fixé de manière fiable par collage ou adhésion de la couche en matériau viscoélastique 32 sur une telle portion disponible de la surface intérieure SI.

Ainsi, le dessin en pointillés des contours des différents morceaux Mi illustrés aux figures n'est pas limitatif de la portée de l'invention, de même que le nombre des morceaux Mi décrits et représentés.

La feuille 30 d'amortissement des vibrations constitue un moyen d'amortissement des vibrations, agencé à l'intérieur de la partie supérieure PS et/ou de la partie inférieure PI du pommeau.

La conception de la feuille 30 d'amortissement des vibrations est par exemple à base d'un matériau viscoélastique acrylique et d'un film de métal en aluminium aussi appelé couche "contrainte", tandis que la couche en matériau viscoélastique 32 est aussi appelée couche "adhésive".

A titre d'exemple, la couche contrainte 34 en aluminium a une épaisseur de 0,25mm et son rôle est de produire des microdéformations de la couche adhésive 32.

La couche adhésive 32 a une épaisseur inférieure à celle de la couche contrainte, par exemple égale à 0,13mm et elle a deux fonctions essentielles.

La couche adhésive 32 a pour première fonction de solidariser par collage ou adhésion la feuille 32 d'absorption des vibrations sur la portion de surface intérieure SI associée.

La couche adhésive 32 a pour deuxième fonction d'absorber l'énergie vibratoire du pommeau, le facteur dit de "perte" du matériau constitutif de la couche 32 étant supérieur à 0,6 pour une température d'utilisation comprise 0°C et 30°C.

A titre d'exemple, les morceaux Mi peuvent être découpés dans un ruban de feuille d'amortissement des vibrations commercialisé par la Société 3M (marque déposée) sous la référence No. 2552.

Dans ce produit, la feuille contrainte 34 est un film d'aluminium, tandis que la couche adhésive 32 est une couche de polymère viscoélastique.

La quantité totale de feuille d'amortissement des vibrations utilisée dépend, comme cela a été expliqué précédemment, des possibilités d'agencement des morceaux Mi, mais elle vise, de préférence, à s'étendre sur au moins 70% de l'aire de la surface intérieure SI du pommeau 10.

Le poids ou la masse ajoutée résultant de l'utilisation de morceaux Mi de la couche 30 d'amortissement des vibrations est négligeable par rapport au poids du pommeau, par exemple de 3 grammes pour un pommeau de 150 grammes.

## Revendications

1. Pommeau (10) de levier de changement de rapport de boîte de vitesses de véhicule automobile comportant un corps creux en matériau rigide comportant une partie supérieure (PS) formant tête de préhension et une partie inférieure (PI), le corps étant délimité par une surface intérieure(SI), le pommeau comportant des moyens internes d'amortissement des vibrations,
**caractérisé en ce qu'**au moins une portion de la surface intérieure (SI) du corps est munie d'un morceau (Mi) d'une feuille (30) d'amortissement des vibrations constituée d'une couche (32) de matériau adhésif viscoélastique qui est fixée par adhésion sur la surface intérieure (SI) du corps, et d'un film (34) de métal solidaire de ladite couche (32).

2. Pommeau selon la revendication 1, **caractérisé en ce qu'**au moins une portion de la surface intérieure (SI) de la partie supérieure (PS) du corps est munie d'un morceau (Mi) de ladite feuille (30) d'amortissement des vibrations.

3. Pommeau selon la revendication 1, **caractérisé en ce que** le pommeau (10) est réalisé en deux pièces complémentaires (12, 14) dont chacune comporte au moins une portion de sa surface intérieure (SI) munie d'un morceau (Mi) de ladite feuille (30) d'amortissement des vibrations.

4. Pommeau selon la revendication précédente, **caractérisé en ce que** chacune des deux pièces complémentaires (12, 14) comporte une partie de la partie supérieure et une partie de la partie inférieure du corps.

5. Pommeau selon la revendication 1, **caractérisé en ce que** ledit morceau est délimité pour constituer un morceau (Mi) d'aire maximale apte à adhérer sur une portion de la surface intérieure (SI) du corps.

6. Pommeau selon la revendication 1, **caractérisé en ce que** ledit film (34) est un film d'aluminium.

7. Pommeau selon la revendication 1, **caractérisé en ce que** ladite couche (32) est réalisée en un polymère viscoélastique, naturel ou synthétique.

8. Pommeau selon la revendication 1, **caractérisé en ce qu'**au moins 70% de l'aire totale de la surface intérieure (SI) du corps est recouverte par des morceaux (Mi) de ladite feuille (30) d'amortissement des vibrations.

9. Pommeau selon la revendication 1, **caractérisé en ce que** le corps est réalisé par moulage en matière plastique, notamment en acrylonitrile butadiène styrène, et/ou en polyamide 6-6 renforcé de fibres.

10. Mécanisme de commande de changement de rapport de boîte de vitesses de véhicule automobile, **caractérisé en ce qu'**il comporte un levier de changement de rapport, des moyens de rappel élastique de ce levier vers au moins une position stable, et **en ce que** le levier comporte un pommeau (10) selon l'une quelconque des revendications précédentes.

## Patentansprüche

1. Knauf (10) eines Getriebeschalthebels eines Kraftfahrzeugs, welcher einen Hohlkörper aus starrem Material aufweist, der einen oberen Teil (PS), der einen Greifkopf bildet, und einen unteren Teil (PI) aufweist, wobei der Körper von einer Innenfläche (SI) begrenzt wird, wobei der Knauf innere schwingungsdämpfende Mittel aufweist, **dadurch gekennzeichnet, dass** wenigstens ein Abschnitt der Innenfläche (SI) des Körpers mit einem Stück (Mi) einer schwingungsdämpfenden Folie (30) versehen ist, die aus einer Schicht (32) eines viskoelastischen Klebematerials, welche durch Haftung an der Innenfläche (SI) des Körpers befestigt ist, und einem Film (34) aus Metall, der mit der Schicht (32) fest verbunden ist, besteht.

2. Knauf nach Anspruch 1, **dadurch gekennzeichnet, dass** wenigstens ein Abschnitt der Innenfläche (SI) des oberen Teils (PS) des Körpers mit einem Stück (Mi) der schwingungsdämpfenden Folie (30) versehen ist.

3. Knauf nach Anspruch 1, **dadurch gekennzeichnet, dass** der Knauf (10) aus zwei komplementären Teilstücken (12, 14) hergestellt ist, von denen jedes wenigstens einen Abschnitt seiner Innenfläche (SI) aufweist, der mit einem Stück (Mi) der schwingungsdämpfenden Folie (30) versehen ist.

4. Knauf nach dem vorhergehenden Anspruch, **dadurch gekennzeichnet, dass** jedes der zwei komplementären Teilstücke (12, 14) einen Teil des oberen Teils und einen Teil des unteren Teils des Körpers umfasst.

5. Knauf nach Anspruch 1, **dadurch gekennzeichnet, dass** das Stück so begrenzt ist, dass es ein Stück (Mi) maximaler Fläche bildet, das in der Lage ist, an einem Abschnitt der Innenfläche (SI) des Körpers anzuhaften.

6. Knauf nach Anspruch 1, **dadurch gekennzeichnet, dass** der Film (34) ein Aluminiumfilm ist.

7. Knauf nach Anspruch 1, **dadurch gekennzeichnet, dass** die Schicht (32) aus einem natürlichen oder synthetischen viskoelastischen Polymer hergestellt ist.

8. Knauf nach Anspruch 1, **dadurch gekennzeichnet, dass** wenigstens 70 % der Gesamtfläche der Innenfläche (SI) des Körpers von Stücken (Mi) der schwingungsdämpfenden Folie (30) bedeckt sind.

9. Knauf nach Anspruch 1, **dadurch gekennzeichnet, dass** der Körper durch Formung aus Kunststoff hergestellt ist, insbesondere aus Acrylnitril-Butadien-Styrol und/oder aus faserverstärktem Polyamid 6.6.

10. Mechanismus zur Steuerung des Gangwechsels eines Kraftfahrzeuggetriebes, **dadurch gekennzeichnet, dass** es einen Gangschalthebel und Mittel zur elastischen Rückstellung dieses Hebels in wenigstens eine stabile Position umfasst, und dadurch, dass der Hebel einen Knauf (10) nach einem der vorhergehenden Ansprüche aufweist.

## Claims

1. Motor vehicle gear shift lever knob (10) comprising a hollow body made of rigid material comprising an upper part (PS) forming a gripping head and a lower part (PI), the body being delimited by an inner surface (SI), the knob comprising internal vibration damping means,
**characterized in that** at least a portion of the inner surface (SI) of the body is provided with a piece (Mi) of a vibration damping sheet (30) made up of a layer (32) of viscoelastic adhesive material which is fastened to the inner surface (SI) of the body by adhesion, and of a metal film (34) secured to said layer (32).

2. Knob according to Claim 1, **characterized in that** at least a portion of the inner surface (SI) of the upper part (PS) of the body is provided with a piece (Mi) of said vibration damping sheet (30).

3. Knob according to Claim 1, **characterized in that** the knob (10) is made of two complementary parts (12, 14), each of which comprises at least a portion of its inner surface (SI) provided with a piece (Mi) of said vibration damping sheet (30).

4. Knob according to the preceding claim, **characterized in that** each of the two complementary parts (12, 14) comprises a part of the upper part and a part of the lower part of the body.

5. Knob according to Claim 1, **characterized in that** said piece is delimited to form a piece (Mi) of maximum area that is able to adhere to a portion of the inner surface (SI) of the body.

6. Knob according to Claim 1, **characterized in that** said film (34) is an aluminium film.

7. Knob according to Claim 1, **characterized in that** said layer (32) is made of a natural or synthetic viscoelastic polymer.

8. Knob according to Claim 1, **characterized in that** at least 70% of the total area of the inner surface (SI) of the body is covered with pieces (Mi) of said vibration damping sheet (30).

9. Knob according to Claim 1, **characterized in that** the body is produced by moulding plastic material, notably acrylonitrile butadiene styrene, and/or fibre-reinforced polyamide 66.

10. Motor vehicle gear shift control mechanism, **characterized in that** it comprises a gear shift lever, elastic return means for returning said lever into at least one stable position, and **in that** the lever comprises a knob (10) according to any one of the preceding claims.
